# DEMANDE DE BREVET EUROPEEN

(11) **EP 0 926 881 A1**
(43) Date de publication de la demande: **30.06.1999**
(21) Numéro de dépôt: 98403211.0
(22) Date de dépôt: 18.12.1998
(51) Int. Cl.: H04N 1/32

(54) **Terminal téléphonique multifonction**

(30) Priorité: 23.12.1997 FR 9716325
(71) Demandeur: SAGEM SA, 75116 Paris (FR)
(72) Inventeur: Nicaise, Pierre, 60580 Coye La Foret (FR)
(74) Mandataire: Bloch, Gérard

(57) **Abrégé**

Le terminal téléphonique multifonction, comportant un poste téléphonique (2), un ensemble de transmission de données (4, 5) et des moyens transducteurs (2, 3) de signalisation sonore, comporte en outre des moyens (11, 12) de réponse à un appel provenant d'une ligne téléphonique (10) de raccordement du terminal et des moyens (13) d'analyse de signaux de la ligne, agencés pour identifier la nature de l'appelant d'après les signaux de ligne et pour commander (14, 15) les moyens transducteurs (2, 3) en fonction de ladite nature.

## Description

Pour signaler l'arrivée d'un appel entrant à l'utilisateur d'un terminal relié au réseau téléphonique, ce dernier émet sur la ligne du terminal des signaux d'activation d'une sonnerie de celui-ci. Si l'on prend le cas d'un télécopieur avec poste téléphonique en parallèle sur la ligne, l'arrivée d'une télécopie provoque, tout comme l'arrivée d'un appel téléphonique, l'actionnement de la sonnerie. L'utilisateur va alors se déplacer pour décrocher le poste, pour ensuite le raccrocher et commuter la ligne sur le télécopieur associé, en constatant qu'il s'agit d'un télécopieur appelant.

De plus, la sonnerie apporte une nuisance sonore à l'environnement et, dans un bureau collectif par exemple, une pluralité de terminaux recevant des appels téléphoniques va considérablement gêner les occupants du bureau.

La présente invention vise à au moins éviter les déplacements inutiles évoqués ci-dessus.

A cet effet, l'invention concerne un terminal téléphonique multifonction, comportant un poste téléphonique et au moins un ensemble de transmission de données, terminal comportant des moyens transducteurs de signalisation sonore de réception d'appel, caractérisé par le fait qu'il comporte des moyens d'analyse de signaux de ligne agencés pour identifier la nature de l'appelant d'après les signaux de ligne et pour ensuite commander les moyens transducteurs en fonction de ladite nature.

Ainsi, la sonnerie indique à l'utilisateur s'il s'agit d'un appel purement téléphonique, nécessitant son intervention. Sinon, le terminal peut rester silencieux ou bien émettre une tonalité spécifique, éventuellement à faible niveau, permettant par exemple d'informer l'utilisateur de l'arrivée d'une télécopie attendue.

L'invention sera mieux comprise à l'aide de la description suivante d'une forme de réalisation préférée du terminal de l'invention, en référence au dessin annexé sur lequel :
- la figure 1 est un schéma par blocs fonctionnels global du terminal de l'invention, et
- la figure 2 illustre, sous forme de diagramme de cheminement, des diverses opérations effectuées dans le terminal.

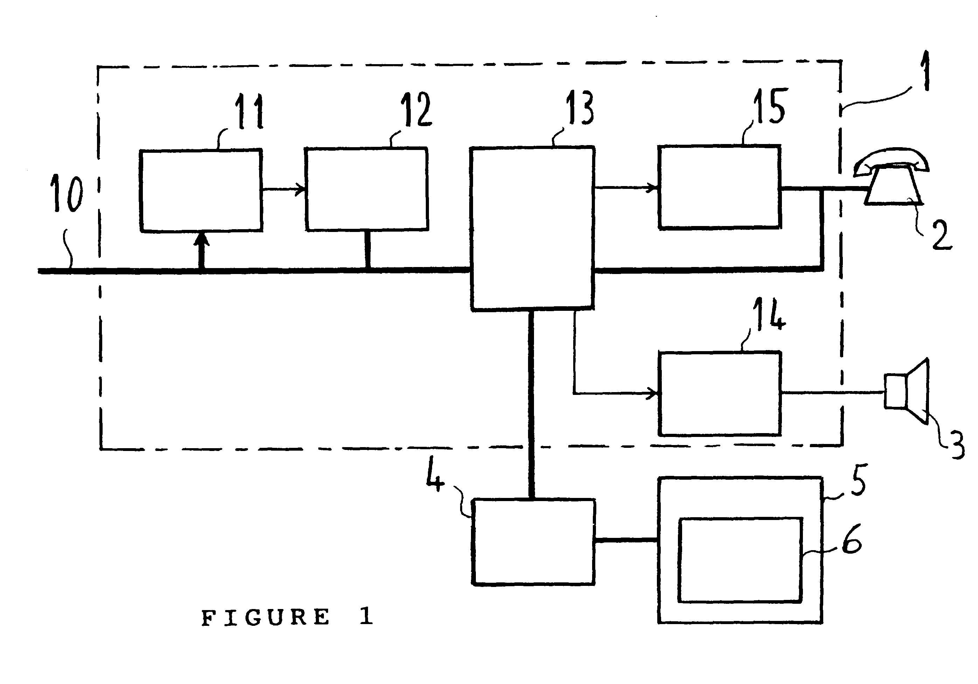

Le terminal représenté sur la figure 1 est un télécopieur avec poste téléphonique 2 associé.

En interface avec la ligne 10 du réseau téléphonique, représentée en trait renforcé, il comporte un ensemble 1, représenté limité par un cadre en ligne en pointillés, comprenant des circuits 11 de détection de signaux de sonnerie provenant de la ligne 10, des circuits 12 de bouclage de ligne, commandés par les circuits 11, et des circuits 13 d'analyse de signaux de ligne, commandant un circuit 14 de génération de signaux d'appel, d'activation d'un transducteur de signalisation de l'arrivée d'un appel, comme par exemple un voyant ou, comme ici, un buzzer 3, les circuits 13 commandant aussi un circuit 15 d'activation de la sonnette du poste 2. Un modem 4 du télécopieur relie le circuit d'interface 1 au reste 5 du télécopieur, comportant une unité centrale 6 à microprocesseur. Les circuits 13 sont en outre agencés pour couper, de façon commandée, la ligne 10 vis-à-vis de la ligne locale du poste 2, d'excitation de la sonnette de celui-ci, et vis-à-vis du modem 4. En outre, ils peuvent, dans une phase de non coupure, aiguiller la ligne 10 sur le poste 2 ou le modem 4. Il s'agit donc d'une fonction équivalant à deux contacts travail de deux lames de relais, reliées ensemble, d'un côté, à la ligne 10 et, de l'autre, au poste 2 et au modem 4, respectivement.

Le fonctionnement global est le suivant.

Lorsque des signaux d'appel, ici du 70 volts alternatif, proviennent par la ligne 10 au détecteur 11, celui-ci commande le bouclage de la ligne 10, ce qui établit la liaison à travers le réseau téléphonique, entre l'appelant et le circuit 1. Le circuit 1 (et en particulier les circuits 11, 12) est donc en tampon entre la ligne 10 et les transducteurs phoniques sonnette 2, buzzer 3, et interdit toute transmission à ceux-ci des signaux d'appel, c'est-à-dire toute commande directe de ceux-ci par les signaux d'appel sur la ligne 10. Les circuits 13 analysent alors les signaux de ligne, provenant de l'appelant, pour déterminer sa nature c'est-à-dire ici déterminer s'il s'agit d'un télécopieur ou d'un poste téléphonique. Selon qu'il est déterminé qu'il s'agit de celui-là ou de celui-ci, les circuits 13, discriminateurs de l'origine des appels, commandent respectivement le buzzer 3 par le circuit 14 ou la sonnette du poste 2 par le circuit 15, produisant une tension alternative d'appel classique comme celle mentionnée plus haut.

Ainsi, l'utilisateur perçoit dans cet exemple l'une de deux sonneries différenciées et peut ainsi éviter de se déranger pour la réception d'une télécopie.

Dans cet exemple, on a choisi d'émettre cependant un signal sonore, atténué de préférence, lors de la réception d'une télécopie, de façon à ce qu'un utilisateur qui attendrait cette télécopie soit informé de son arrivée.

Il peut être prévu de n'utiliser que la sonnette du poste 2 comme transducteur sonore, en modulant son niveau d'excitation, la cadence de celle-ci (cycle normal de 5 s) ou encore la fréquence du signal d'appel l'activant, usuellement à 50 hertz en Europe. On peut encore prévoir d'agir de même sur le buzzer (3) pour le commander de façon spécifique selon qu'il s'agit d'un télécopieur ou d'un ordinateur, ou équivalent, qui appelle.

Dans le cas où la ligne téléphonique serait une ligne numérique, par exemple à la norme S0 prévoyant deux canaux B à 64 kb/s et un canal D de signalisation à 16 kb/s, c'est ce dernier canal qui transmettrait les signaux d'appel sur la ligne. Le circuit 11 comporterait alors un registre tampon et un circuit logique de reconnaissance des signaux d'appel, et non plus un relais ou photocoupleur de détection.

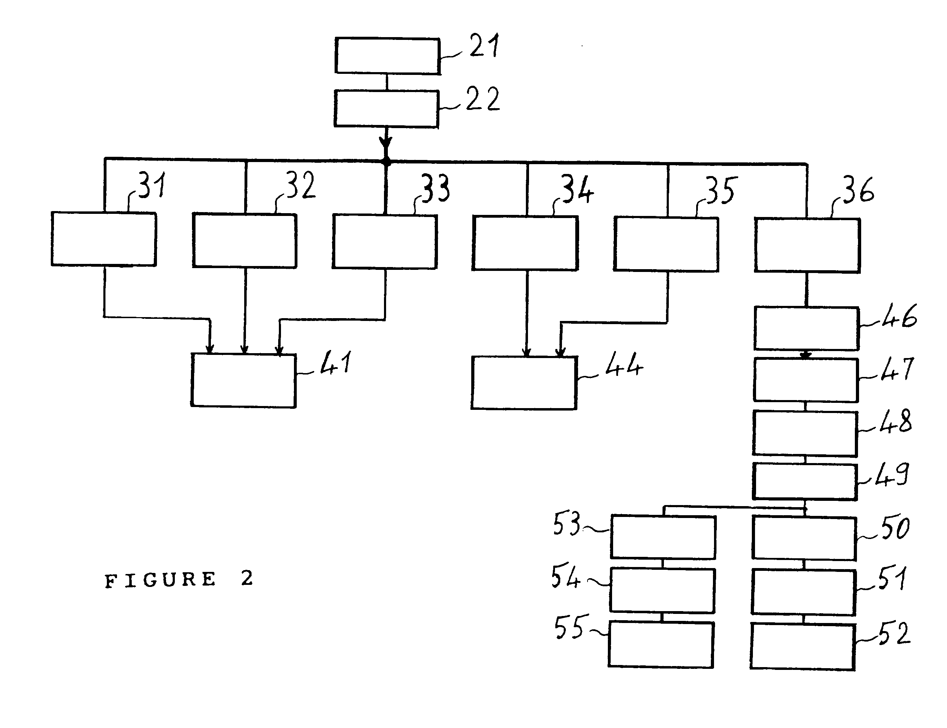

La figure 2 illustre plus en détail l'analyse qui est faite des signaux de ligne.

On suppose ici qu'un PC est en outre relié aux circuits 1, tout comme le poste 2 et le télécopieur 4, 5. Dans un but de clarté, il n'a pas été représenté sur la figure 1.

Les étapes de traitement d'un appel arrivant par les circuits 1 sont les suivantes.

A une étape 21, le circuit 11 détecte les signaux de sonnerie en ligne et commande le bouclage de celle-ci, ce qui commande l'arrêt de l'envoi des signaux d'appel depuis le central téléphonique de rattachement de la ligne 10 et établit la liaison à travers le réseau téléphonique. Les circuits 13 vont alors surveiller l'état électrique de la ligne 10 pour déterminer, d'après l'évolution de tension qu'elle présente, la nature de l'appelant, c'est-à-dire s'il s'agit de signaux de voix ou de données.

L'identité de l'appelant peut aussi être reçue par les circuits 13 lorsque le réseau téléphonique transmet cette identité, par exemple après le premier train de signaux d'appel en ligne (service CLASS). En pareil cas, des moyens de relation homme/machine du télécopieur, tels que pupitre et écran d'affichage, ou simplement le clavier du poste 2 exploité avec un préfixe spécifique et éventuellement une réponse vocale, permettent à l'utilisateur de mémoriser et modifier, dans un agenda électronique, des identités de correspondants associées à un mode de traitement de leurs appels arrivants. Par lecture des traitements, par adressage selon l'identité reçue de la ligne téléphonique, on peut ainsi éconduire certains correspondants en programmant une absence d'avertissement local de l'arrivée de leurs appels et/ou en renvoyant en ligne un signal d'occupation, par les circuits 13. L'utilisateur peut encore prévoir de procéder de même pour tout appel arrivant lorsqu'il est absent, l'agenda se réduisant alors à une simple mémoire d'instruction, programmable par l'utilisateur.

Après armement d'une temporisation à une étape 22, on observe (étape 31) si la ligne 10 présente un "silence", c'est-à-dire une absence de signaux alternatifs, pendant une durée prédéterminée.

En pareil cas, on considère qu'il s'agit d'un appel d'un appareil de transmission de données genre PC, qui appelle donc le PC local. On passe alors à une étape 41, dans laquelle on active le buzzer 3 pour produire une sonnerie déterminée, S2. De même, les étapes 32 et 33 concernent la détection de signaux de signalisation respectivement appelés CI-V8 (indicateur d'appel V8) et CNG-données à 1 300 Hz découpé, spécifiques de données autres que la télécopie, concernant le PC local, et aboutissant aussi à l'étape 41.

Des étapes 34 et 35 consistent à détecter respectivement des signaux CNG-télécopieur à 1 100 Hz découpé et DTMF, pour alors passer à une étape 44 de commande du buzzer 3 selon une sonnerie S1.

A une étape 36, se déroulant en parallèle avec les étapes 31 à 35, on détecte l'expiration de la temporisation (22) et on vérifie, à une étape 46, que les étapes de sonnerie 41 et 44, mutuellement exclusives, n'ont pas été atteintes. On passe alors à une étape 47, dans laquelle c'est le circuit 15 qui est commandé pour faire sonner le poste 2 par une sonnerie S3.

Dans cet exemple, le télécopieur 5 comporte un répondeur-enregistreur téléphonique intégré (mémoire, circuits de compression/décompression de la voix). A une étape 48, on compte le nombre de sonneries S3, ou simplement le temps correspondant, et active le répondeur pour émettre un message sonore d'accueil à une étape 49, en cas de dépassement d'un seuil de temps de sonnerie du poste 2.

Dans une chaîne d'étapes 50, 51 et 52 suivantes, on détecte une occupation éventuelle (tonalité d'occupation) de la ligne 10 (raccrochage de l'appelant), on arrête alors le répondeur puis on libère la ligne 10. Sinon, après l'étape 50, on détecte le décroché du poste 2 à une étape 53, on arrête alors le répondeur à une étape 54 et on passe au mode téléphonique manuel, classique, à une étape 55.

Il peut être prévu, après le bouclage de ligne, d'émettre en retour sur la ligne, par les circuits 13, un signal de recherche de correspondant, se substituant au retour d'appel, pour en particulier éviter qu'un abonné qui appelle ne perçoive aucune réponse pendant la phase d'analyse des signaux de ligne. Ce signal de recherche est alors soustrait des signaux de ligne avant analyse de ceux-ci dans les circuits 13, afin de l'exclure de l'analyse. Il peut être prévu une fréquence spécifique pour cette tonalité et un filtre coupe-bande peut alors rejeter cette fréquence, en particulier pour l'étape 31 de détection de silence.

Les circuits 1 peuvent, en variante, être prévus pour une ligne téléphonique numérique, par exemple du type S0 à deux canaux B, à 64 kb/s, et un canal D, à 16 kb/s.

Que la ligne soit analogique ou numérique, l'analyse des signaux de ligne s'effectue de préférence au moyen de filtres numériques. Ceux-ci peuvent en particulier être physiquement intégrés à l'unité centrale 6, unique, et l'utiliser en partage de temps.

## Revendications

1. Terminal téléphonique multifonction, comportant un poste téléphonique (2), au moins un ensemble de transmission de données (4, 5) et des moyens transducteurs (2, 3) de signalisation sonore, caractérisé par le fait qu'il comporte des moyens (11, 12) de réponse à un appel provenant d'une ligne téléphonique (10) de raccordement du terminal et des moyens (13) d'analyse de signaux de la ligne, agencés pour identifier la nature de l'appelant d'après les signaux de ligne et pour commander (14, 15) les moyens transducteurs (2, 3) en fonction de ladite nature.

2. Terminal selon la revendication 1, dans lequel les moyens d'analyse (13) sont agencés pour détecter des signaux de ligne spécifiques d'un télécopieur et pour commander en conséquence un buzzer (3).

3. Terminal selon la revendication 2, dans lequel les moyens d'analyse (13) sont agencés pour détecter des signaux de ligne spécifiques d'un ordinateur et pour alors commander le buzzer (3) de façon spécifique.

4. Terminal selon l'une des revendications 1 à 3, dans lequel les moyens d'analyse (13) sont agencés pour moduler le niveau d'excitation d'une sonnette du poste (2) en fonction de ladite nature.

5. Terminal selon la revendication 4, dans lequel les moyens d'analyse (13) sont agencés pour moduler une cadence d'excitations cycliques de la sonnette (2).

6. Terminal selon l'une des revendications 1 à 5, dans lequel il est prévu des moyens (11) de détection de signaux d'appel commandant des moyens (12) de bouclage de ligne agencés pour couper toute transmission, vers le poste (2), des signaux d'appel provenant de la ligne (10).

7. Terminal selon l'une des revendications 1 à 6, dans lequel il est prévu des moyens (13) d'émission en ligne d'une tonalité de recherche de correspondant et des moyens (13) pour exclure, de l'analyse, ladite tonalité.

8. Terminal selon l'une des revendications 1 à 7, dans lequel il est prévu des moyens (13) de réception de signaux d'identification de l'origine des appels, agencés pour adresser par ceux-ci un agenda comportant des identités de correspondants, associées à un mode de traitement de leurs appels, et commander en conséquence les moyens transducteurs (2, 3).

9. Terminal selon l'une des revendications 1 à 8, dans lequel il est prévu des moyens (13) d'émission en ligne d'une tonalité d'occupation, commandés par des moyens mémoires programmables.
